# EUROPEAN PATENT APPLICATION

(11) **EP 2 236 803 A1**
(43) Date of publication of application: **06.10.2010**
(21) Application number: 09703920.0
(22) Date of filing: 19.01.2009
(51) Int. Cl.: F02G 5/04, F01P 3/18, F01P 3/20

(54) **WASTE HEAT UTILIZING DEVICE FOR INTERNAL COMBUSTION ENGINE**

(30) Priority: 21.01.2008 JP 2008010363
(71) Applicant: Sanden Corporation, Isesaki-shi, Gunma 372-8502 (JP)
(72) Inventor: KASUYA, Junichiro, Isesaki-shi Gunma 372-8502 (JP); OGIWARA, Satoshi, Yokohama-shi Kanagawa 220-8623 (JP); TOKUDA, Masaaki, Yokohama-shi Kanagawa 220-8623 (JP); SAITO, Tomohiko, Yokohama-shi Kanagawa 220-8623 (JP)
(74) Representative: Oser, Andreas
(86) International application number: PCT/JP2009/050685
(87) International publication number: WO 2009/093549

(57) **Abstract**

A waste heat utilization device for an internal combustion engine (2) comprising a cooling water circuit (4) including a radiator (12) for cooling cooling-water by means of outside air drawn to pass through the radiator, a Rankine cycle (6) including a first condenser (24) for condensing a refrigerant, and a refrigeration cycle (8) including a second condenser (36) for condensing a refrigerant, wherein the first and second condensers (24, 36) are water-cooled heat exchangers, and the waste heat utilization device includes a water circuit (44) including an air-cooled heat exchanger (46) for cooling water that has passed through the first and second condensers (24, 36), by means of outside air drawn to pass through the air-cooled heat exchanger, and a heat exchange unit composed of the air-cooled heat exchanger (46) and the radiator (12).

## Description

### Technical Field

This invention relates to a waste heat utilization device for an internal combustion engine, specifically a waste heat utilization device for an internal combustion engine, suited to be mounted on a vehicle.

### Background Art

This kind of waste heat utilization device for an internal combustion engine is mounted on a vehicle, for example, and comprises a Rankine cycle (RC circuit) for recovering waste heat by means of cooling water for cooling an vehicle engine and an air-conditioning cycle (AC circuit) for conditioning air in the vehicle interior.

The RC circuit includes an expansion machine for expanding a refrigerant in vapor form that has been heated by recovered waste heat, thereby producing drive power, and a Rankine cycle condenser (RC condenser) for condensing the refrigerant that has passed through the expansion machine, by means of outside air.

The AC circuit, on the other hand, includes a compressor powered externally to compress a refrigerant in vapor form that has been heated by air in the vehicle interior, and an air-conditioning cycle condenser (AC condenser) for condensing the refrigerant that has passed through the compressor, by means of outside air.

There is disclosed a technology in which a condenser shared by the RC circuit and the AC circuit is provided to be selectively used as an RC condenser or an AC condenser (see Japanese Patent Application Laid-open No. Sho 63-96449, for example).

Such condensers are, however, commonly arranged in front of a radiator provided to receive airflow from the vehicle front, produced by the vehicle's travelling, to cool the engine. There is therefore a problem that such arrangement of condensers increases resistance to the airflow toward the radiator, thus reduces the amount of air flowing into the radiator, and thus worsens the heat transfer performance of the radiator.

In the above-mentioned prior art, in place of providing two condensers, a shared condenser functioning as an RC condenser and an AC condenser is provided, which can reduce the resistance to the airflow toward the radiator. However, the shared condenser cannot be used as the AC condenser and the RC condenser at the same time, so that the waste heat utilization device cannot operate while the air-conditioning system is operating. There is therefore room for improvement of the energy recovery efficiency of the waste heat utilization device.

### Disclosure of the Invention

The present invention has been made in consideration of problems as mentioned above. An object of the present invention is to provide a waste heat utilization device for an internal combustion engine which can offer greatly improved energy recovery efficiency.

In order to achieve the above object, the present invention provides a waste heat utilization device for an internal combustion engine, comprising a cooling water circuit including a radiator for cooling cooling-water that has been heated by waste heat produced by the internal combustion engine, by means of outside air drawn to pass through the radiator, a Rankine cycle including an expansion machine for expanding a refrigerant that has been heated by the cooling water, thereby producing drive power and a first condenser for condensing the refrigerant that has passed through the expansion machine, and a refrigeration cycle including a compressor for compressing a refrigerant that has been heated by a heat source and a second condenser for condensing the refrigerant that has passed through the compressor, wherein the first and second condensers are water-cooled heat exchangers, and the waste heat utilization device includes a water circuit including an air-cooled heat exchanger for cooling water that has passed through the first and second condensers, by means of outside air drawn to pass through the air-cooled heat exchanger, and a heat exchange unit composed of the air-cooled heat exchanger and the radiator.

In the above-described waste heat utilization device for the internal combustion engine, the provision of the air-cooled heat exchanger makes it possible to cause the refrigerant in the Rankine cycle to be condensed in the first condenser and the refrigerant in the refrigeration cycle to be condensed in the second condenser, in parallel. Consequently, the waste heat utilization device can offer improved energy recovery efficiency, with reduced resistance to airflow exerted by the heat exchange unit.

In a preferred aspect of the waste heat utilization device for the internal combustion engine, the water circuit is configured such that the first and second condensers are connected in parallel to the air-cooled heat exchanger and includes a flow distribution means for distributing water flow to the first and second condensers in proportions depending on refrigerant condensing abilities required by the Rankine cycle and the refrigeration cycle.

This configuration allows the first and second condensers to have refrigerant condensing abilities required depending on circumstances, and therefore can improve the refrigerant condensing performance of the first and second condensers, and thus, further improve the energy recovery efficiency of the waste heat utilization device.

In a preferred aspect of the waste heat utilization device for the internal combustion engine, the water circuit is configured such that the first and second condensers are connected in series to the air-cooled heat exchanger, where the second condenser is before the first condenser in the direction of water flow toward the air-cooled heat exchanger.

In this configuration, the water circulating in the water circuit passes through the second condenser and then through the first condenser so that heat transfer takes place stepwise. This can improve the efficiency of the refrigeration cycle, and at the same time improve the energy recovery efficiency of the waste heat utilization device.

In a preferred aspect of the waste heat utilization device for the internal combustion engine, the first and second condensers are integrated.

This configuration allows the first and second condensers to have a reduced size, and thus, makes it easy to make space for the waste heat utilization device, and at the same time can improve the energy recovery efficiency of the waste heat utilization device.

In a preferred aspect of the waste heat utilization device for the internal combustion engine, the heat exchange unit is constructed such that the radiator is arranged behind the air-cooled heat exchanger in the direction of outside air drawn into them, or the radiator and the air-cooled heat exchanger are arranged side by side in a direction substantially perpendicular to the direction of outside air drawn into them and integrally connected.

In these configurations, the resistance to airflow exerted by the heat exchange unit is reduced, compared with when the first and second condensers are arranged in front of the radiator, and the waste heat utilization device can offer improved energy recovery efficiency.

In a preferred aspect of the waste heat utilization device for the internal combustion engine, the heat exchange unit includes a blower for controlling the respective amounts of outside air drawn into the air-cooled heat exchanger and the radiator, independently.

This configuration enables the respective amounts of air fed to the air-cooled heat exchanger and the radiator to be controlled depending on heat loads on them, and therefore, can prevent waste of blower driving power and improve the energy recovery efficiency of the waste heat utilization device.

In a preferred aspect of the waste heat utilization device for the internal combustion engine, the heat exchange unit includes heat exchange sections constituting the air-cooled heat exchanger and the radiator, respectively, in which heat transfer takes place independently, and a shared heat exchange section used as a supplementary section to either one of the heat exchange sections.

This configuration can increase the heat transfer surface area of the radiator or the air-cooled heat exchanger depending on heat loads on the heat exchange sections, and therefore improve the water cooling performance of the radiator and the air-cooled heat exchanger, the refrigerant condensing performance of the first and second condensers, and thus, further improve the energy recovery efficiency of the waste heat utilization device.

In a preferred aspect of the waste heat utilization device for the internal combustion engine, the heat exchange unit includes a flow path change means for changing a water flow path to cause the shared heat exchange section to function as a supplementary section to either one of the heat exchange sections.

This configuration can more smoothly increase the heat transfer surface area of the radiator or the air-cooled heat exchanger depending on heat loads on the heat exchange sections, and therefore, improve the water cooling performance of the radiator and the air-cooled heat exchanger, the refrigerant condensing performance of the first and second condensers, and thus, further improve the energy recovery efficiency of the waste heat utilization device.

In a preferred aspect of the waste heat utilization device for the internal combustion engine, the heat exchange unit includes a plurality of shared heat exchange sections.

This configuration can greatly increase the heat transfer surface area of the radiator or the air-cooled heat exchanger, and therefore, improve the water cooling performance of the radiator and the air-cooled heat exchanger, the refrigerant condensing performance of the first and second condensers, and thus, further improve the energy recovery efficiency of the waste heat utilization device.

### Brief Description of the Drawings

FIG. 1 is a schematic diagram schematically showing a waste heat utilization device for an internal combustion engine according to a first embodiment of the present invention,
FIG. 2 is a vertical cross-sectional view schematically showing only a front side of a vehicle equipped with a waste heat utilization device of FIG. 1,
FIG. 3 is a see-through diagram schematically showing only the front side of the vehicle of FIG. 2 viewed from above,
FIG. 4 is a see-through diagram schematically showing only a front side of a vehicle according to a second embodiment of the present invention,
FIG. 5 is a schematic diagram showing heat exchange sections of a radiator and an air-cooled heat exchanger shown in FIG. 4,
FIG. 6 is a see-through diagram schematically showing only a front side of a vehicle viewed from above, where a shared heat exchange section shown in FIG. 5 is used as a supplementary section to the heat exchange section of the air-cooling heat exchanger,
FIG. 7 is a see-through diagram schematically showing only a front side of a vehicle viewed from above, where a shared heat exchange section as shown in FIG. 5 but increased in size, or a plurality of shared heat exchange sections are provided and used as a supplementary section to the heat exchange section of the air-cooled heat exchanger,
FIG. 8 is a schematic diagram schematically showing only a water circuit of a variant of the waste heat utilization device for the internal combustion engine according to the present invention, and
FIG. 9 is a schematic diagram schematically showing an integrated condenser in which an AC condenser and an RC condenser as shown FIG. 8 are integrated.

### Best Mode of Carrying out the Invention

Referring to the drawings attached, first, a first embodiment of the present invention will be described below.

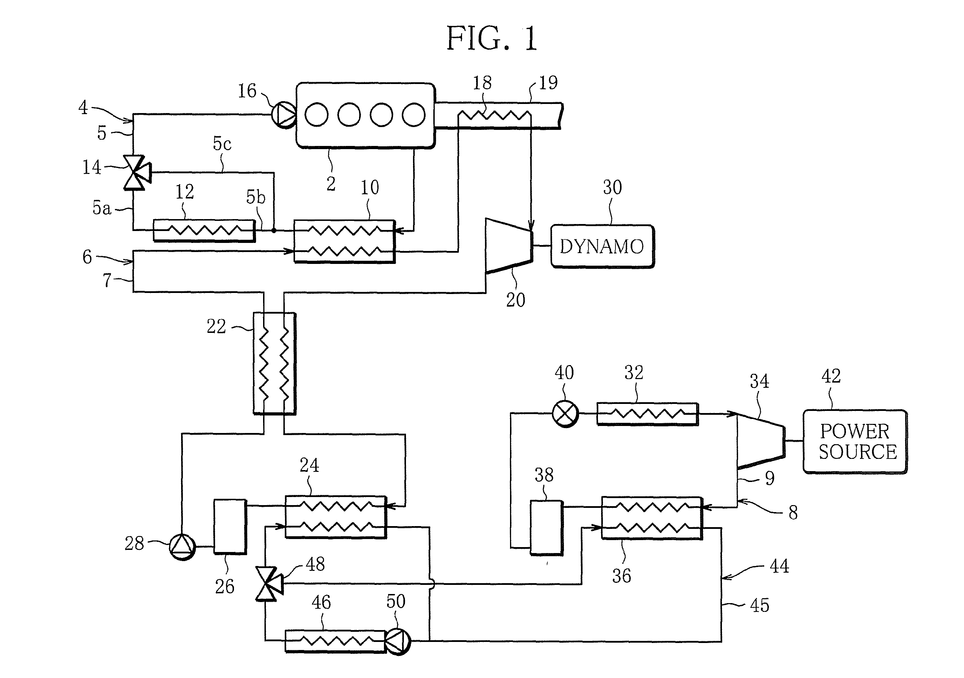

FIG. 1 is a schematic diagram schematically showing the configuration of a waste heat utilization device for an internal combustion engine according to the first embodiment. The waste heat utilization device is mounted on a vehicle and comprises a cooling water circuit 4 for cooling a vehicle engine 2, a Rankine cycle circuit (Rankine cycle) 6 (hereinafter referred to as "RC circuit") for recovering waste heat produced by the engine 2, and an air-conditioning cycle circuit (refrigeration cycle) 8 (hereinafter referred to as "AC circuit") for conditioning air in the vehicle interior not shown.

The cooling water circuit 4 forms a closed circuit with an evaporator 10, a radiator 12, a thermostat 14 and a water pump 14 serially arranged in a cooling water circulation line 5 extending from the engine 2, in the direction of flow of cooling water.

The evaporator 10 transfers heat from the cooling water in the cooling water circuit 4 to a refrigerant in the RC circuit 6. It thus absorbs, or recovers the waste heat produced by the engine 2 and transfers it to the RC circuit 6, where hot water, or cooling water having been heated by the engine 2 serves as a heat transfer medium. The cooling water which has lost heat to the refrigerant when passing through the evaporator 10 becomes again hot water, or heated water by cooling the engine 2.

The radiator 12 is arranged in series with the evaporator 10 to further cool the cooling water which has lost heat to the refrigerant when passing through the evaporator 10, by transferring heat to outside air.

The thermostat 14 is a mechanical three-way valve for controlling the amount of cooling water passing through the radiator 12 depending on the cooling water temperature, and has two inlet ports and one outlet port. One of the two inlet ports is connected to a line 5a extending from the radiator 12, and the other is connected to a bypass line 5c separating from a line 5b connecting the evaporator 10 and the radiator 5c to pass around the radiator 12, so that the thermostat can increase or decrease the amount of cooling water passing through the radiator 12 depending on the cooling water temperature, thereby preventing the engine 2 from being overheated or overcooled.

The water pump 16 is fitted to the engine 2 and driven depending on the revolving speed of the engine 2 to satisfactorily circulate the cooling water in the cooling water circuit 4.

The RC circuit 6 forms a closed circuit with the aforementioned evaporator 10, a heating device 18, an expansion machine 20, a regenerator 22, a Rankine cycle condenser (first condenser) 24 (hereinafter referred to as "RC condenser"), a vapor-liquid separator 26 and a refrigerant pump 28 serially arranged in a refrigerant circulation line 7, in the direction of flow of a refrigerant.

The heating device 18 is an exhaust-gas heat exchanger for heating the refrigerant by means of exhaust gas discharged from the engine 4 and flowing in an exhaust gas pipe 19. The heating device further heats the refrigerant that has been heated in the evaporator 10.

The expansion machine 20 is a fluid machine for expanding the refrigerant that has been heated into a superheated vapor in the evaporator 10, thereby producing rotary drive power. The expansion machine 20 is mechanically connected to a dynamo 30 for converting the produced rotary drive power to electrical power so as to be usable outside the waste heat utilization device.

The regenerator 22 is an internal heat exchanger of the RC circuit 6 for heating the refrigerant flowing toward the evaporator 10 inlet by the refrigerant flowing from the expansion machine 20 outlet, thereby promoting transfer of heat from the expansion machine 20 outlet to the evaporator 10 inlet, thereby increasing the energy recovered in the RC circuit 6.

The RC condenser 24 is a heat exchanger for condensing the refrigerant that has passed through the regenerator 22.

The vapor-liquid separator 26 is a receiver for separating the refrigerant that has been condensed in the RC condenser 24 into a vapor and a liquid. Only the liquid refrigerant separated here flows to the refrigerant pump 28.

The refrigerant pump 28 is an electrical pump driven according to a signal fed to its drive section. The refrigerant pump 28 forces the liquid refrigerant from the vapor-liquid separator 26 toward the evaporator 10, so that the refrigerant circulates in the RC circuit 6 satisfactorily.

The AC circuit 8 forms a closed circuit with an air-conditioning cycle evaporator 32, a compressor 34, an air-conditioning cycle condenser (second condenser) 36 (hereinafter referred to as "AC condenser"), a vapor-liquid separator 38 and an expansion valve 40 serially arranged in a refrigerant circulation line 9, in the direction of flow of a refrigerant.

The air-conditioning cycle evaporator 32 is a heat exchanger for transferring heat from air in the vehicle interior to the refrigerant circulating in the AC circuit 8. Specifically, it causes the refrigerant to evaporate by taking heat from the air in the vehicle interior, thereby transferring heat from the air in the vehicle interior to the AC circuit 8 and thus, conditioning the air in the vehicle interior to a desired temperature.

The compressor 34 is driven by a power source 42 mechanically connected thereto. It compresses the refrigerant which has evaporated in the evaporator 32, so that the refrigerant becomes a superheated vapor.

The AC condenser 36 is a heat exchanger for condensing the refrigerant discharged from the compressor 34. The liquid refrigerant resulting from the condensation in the AC condenser 36 is sent via the vapor-liquid separator 38 to the expansion valve 40, then expanded when passing through the expansion valve 40, and then sent to the evaporator 32.

In the present embodiment, the RC condenser 24 and the AC condenser AC are water-cooled heat exchanger in which heat is transferred to water. Thus, the waste heat utilization device includes, in addition to the above-described circuits 4, 6 and 8, a water circuit 44 including the condensers 24, 36.

The water circuit 44 includes an air-cooled heat exchanger 46 for cooling the water which has been used to condense the refrigerant in the condensers 24 and 36, by means of outside air.

The water circuit 44 is configured such that the condensers 24, 26 are connected in parallel to the air-cooled heat exchanger 46 by a water circulation line 45, a linearly-drivable three-way valve (flow distribution means) 48 is provided at a junction at which a line from the air-cooled heat exchanger 46 divides into a line to the condenser 24 and a line to the condenser 36, and a water pump 50 is provided at a water inlet of the air-cooled heat exchanger 46.

The condensers 24, 36 are arranged such that the water and the refrigerant pass through each condenser 24, 36 in the opposite directions. Although not illustrated, the condensers 24, 36 may be integrated.

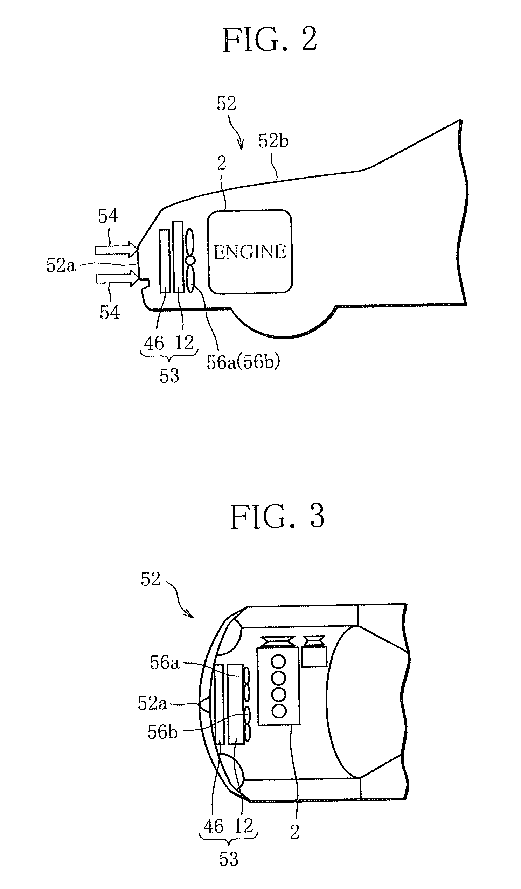

FIG. 2 is a vertical cross-sectional view schematically showing only a front 52a side of a vehicle 52 equipped with a waste heat utilization device. An engine 2 is installed under a hood 52a of the vehicle 52. On the front 52a side of the engine 2, there are arranged an air-cooled heat exchanger 46 and a radiator 12 in the front 52a to back direction of the vehicle 52, with the radiator being right behind the air-cooled heat exchanger, to constitute a heat exchange unit 53.

The traveling of the vehicle 52 causes airflow 54 to be drawn into the heat exchange unit 53, so that heat transfer takes place between the water circulating in the water circuit 44 and air and between the cooling water circulating in the cooling water circuit 4 and air.

As seen from FIG. 3, which is a see-through diagram showing the front 52a side of the vehicle 52 viewed from above, fans (blowers) 56a, 56b, shared by the air-cooled heat exchanger 46 and the radiator 12, are provided at the back of the radiator 12. The fans 56a, 56b control the amount of air 54 passing through the air-cooled heat exchanger 46, and thus, also the amount of air passing through the radiator 12.

The waste heat utilization device configured as described above performs flow distribution control in which water flow is distributed to the condensers 24, 36 in proportions depending on refrigerant condensing abilities required in the circuits 6 and 8, by driving the three-way valve 48.

Specifically, a drive section of the three-way valve 48 is electrically connected to an electronic control unit (ECU), not shown, provided to control the vehicle 52 and the waste heat utilization device. If, for example, no use of the AC circuit 8 is chosen in winter, the ECU puts the three-way valve 48 in a position to direct all the incoming flow to the RC radiator 24 so that water circulating in the water circuit 44 will all pass through the RC condenser 24.

If, on the other hand, recovering no waste heat from the engine 2 in the RC circuit 6 is chosen to cope with an increased heat load on the AC condenser 36 in summer, the ECU puts the three-way valve 48 in a position to direct all the incoming flow to the AC condenser 36 so that water circulating in the water circuit 44 will all pass through the AC condenser 36.

Further, if the power generated by the dynamo 30 is too great, or exceeds the power demanded, the ECU puts the three-way valve 48 in a position to direct a greater proportion of the incoming flow to the AC condenser 36 so that a reduced amount of water will pass through the RC condenser 24.

In this manner, the ECU controls the distribution of water flow to the condensers 24, 36 depending on the conditions under which the vehicle 52 and the waste heat utilization device are operating.

As understood from the above, the present embodiment of the waste heat utilization device can offer improved energy recovery efficiency by improving the refrigerant condensing performance of the condensers 24, 36.

Specifically, with the provision of a single air-cooled heat exchanger 46, the refrigerant in the circuit 6 and the refrigerant in the circuit 8 can be condensed in the condensers 24, 36 at the same time. This enables improved refrigerant condensing performance of the condensers 24, 36, and at the same time reduction in resistance to airflow exerted by the heat exchange unit 53.

Further, the ECU's control of water flow distribution to the condensers 24, 26 allows the respective condensers 24, 36 to have refrigerant condensing abilities required depending on circumstances, and thus, enables further improved refrigerant condensing performance of the condensers 24, 36.

Further, the arrangement that the water and the refrigerant pass through each condenser 24, 36 in the opposite directions can provide improved heat exchange efficiency in each condenser 24, 36, resulting in further improved refrigerant condensing performance of the condensers 24, 36.

Further, although the condensers 24, 36 are used at the same time, independently, the resistance to airflow toward the radiator 12 is reduced, so that the engine 2 can be reliably prevented from overheating.

If the condensers 24, 36 are integrated, the condensers 24, 36 can have a reduced size, which makes it easy to make space for the waste heat utilization device.

Next, a second embodiment will be described.

In the second embodiment, the air-cooled heat exchanger 46 and the radiator 12 of the first embodiment are arranged in the width direction of a vehicle 52 and integrally connected to constitute a heat exchange unit 57. In the other respects, it is identical in structure to the above-described first embodiment.

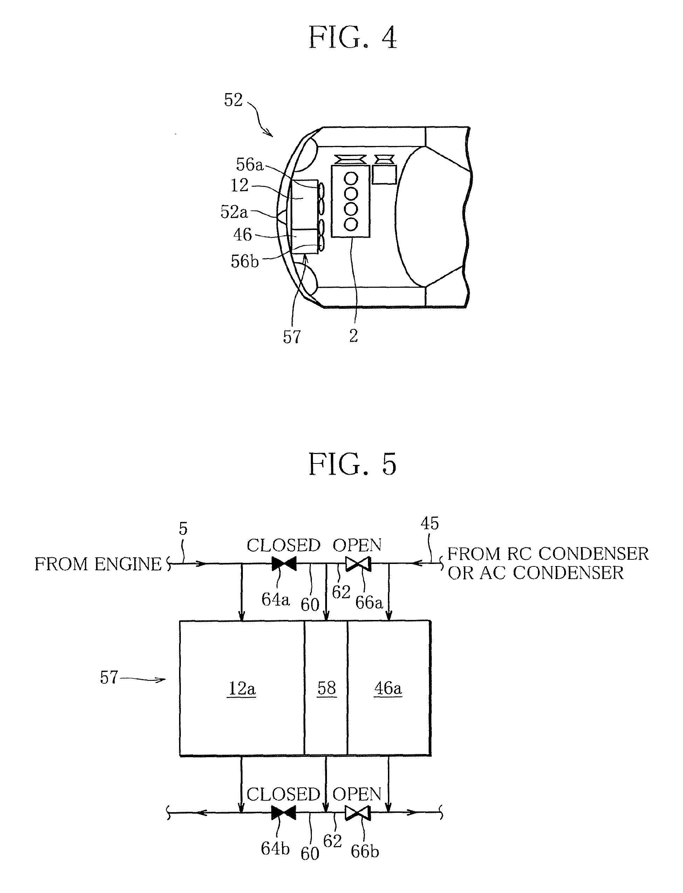

FIG. 4 shows a see-through diagram showing a front side 52a of a vehicle 52 according to the second embodiment viewed from above. A radiator 12 is greater in size than an air-cooled heat exchanger 46, and the revolving speeds of fans 56a, 56b provided at the back of the air-cooled heat exchanger 46 and the radiator 12, respectively, are controlled independently.

FIG. 5 is a schematic diagram showing heat exchange sections 12a, 46a of the radiator 12 and the air-cooled heat exchanger 46. Heat transfer from water to outside air takes place in the heat exchange sections 12a, 46a, independently.

The heat exchange section 12a is greater in heat transfer surface area than the heat exchange section 46a, and a shared heat exchange section 58, usable as a supplementary section to either one of the heat exchange sections 12a, 46a, is provided between the heat exchange sections 12a, 46a.

The shared heat exchange section 58 is connected in parallel with the heat exchange section 12a by an extension of the circulation line 5 extending from the engine 2, and connected in parallel with the heat exchange section 46a by an extension of the circulation line 45 extending from the RC condenser 24 or the AC condenser 36.

Open-close valves 64a, 64b are fitted to the extension 60 of the circulation line 5 before and after the shared exchange section 58, respectively, and open-close valves 66a, 66b are fitted to the extension 62 of the circulation line 45 before and after the shared heat exchange section, respectively.

The open-close valves (flow path change means) 64a, 64b, 66a, 66b are electrically connected to the ECU. Depending on heat loads on the heat exchange sections 12a, 46a, the ECU performs flow path change control, namely opens the open-close valves 64a, 64b together and closes the open-close valves 66a, 66b together, or vice versa, thereby allowing a flow through the extension 60 and preventing a flow through the extension 62, or vice versa, thereby causing the shared heat exchange section 58 to function as a supplementary section to the heat exchange section 12a or 46a.

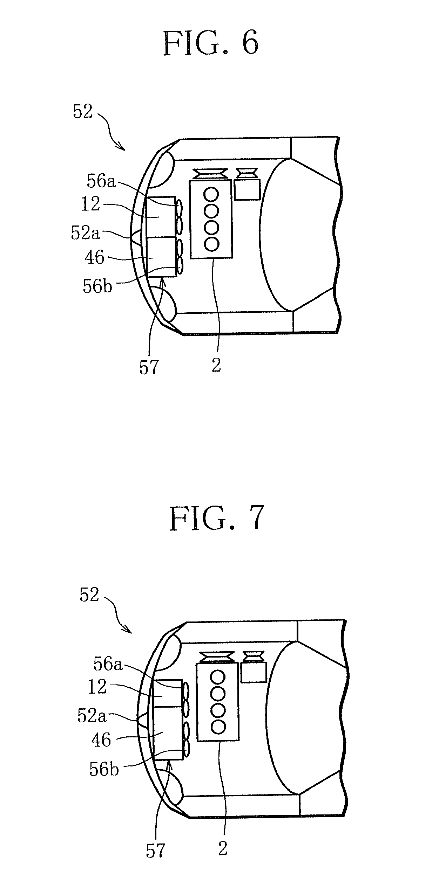

Specifically, in FIG. 5, the open-close valves 64a, 64b are closed together while the open-close valves 66a, 66a are opened together. This is the case where the capacity of the radiator 12 is sufficient for a heat load thereon, so that the shared heat exchange section 58 is used as a supplementary section to the heat exchange section 46a of the air-cooled heat exchanger 46. This means that the air-cooled heat exchanger 46 has an increased heat transfer surface area as shown in FIG. 6, and thus, an increased cooling capacity.

Suppose that, in the above-described flow path change control, the shared heat exchange section 58 is first used as a supplementary section to the heat exchange section 12a of the radiator 12 and then used as a supplementary section to the heat exchange section 46a of the air-cooled heat exchanger 46. In such case, since the cooling water having cooled the engine 2 is, for example at about 90°C and the water having been used for condensation in the RC condenser 24 or the AC condenser 36 is, for example at about 40°C, it is desirable to close the open-close valves 64a, 64b together, and after the passing of time predetermined to allow a sufficient decrease of the temperature of the cooling water staying in the shared heat exchange section 58, open the open-close valve 66a, 66b together to complete the flow path change.

Further, it can be arranged such that the shared heat exchange section 58 has an increased heat transfer surface area compared with that shown in FIG. 5, or a plurality of shared heat exchange sections 58 are provided so that the heat exchange section size, or heat transfer surface area of the radiator 12 and the air-cooled heat exchanger 46 can be more flexibly varied depending on heat loads on the heat exchange sections 12a, 46a, as shown in FIG. 7.

Thus, like the first embodiment, the second embodiment enables improved refrigerant condensing performance of the condensers 24, 36, and thus, improved energy recovery efficiency of the waste heat utilization device.

Particularly, the second embodiment enables improved water cooling performance of the radiator 12 and the air-cooled heat exchanger 46, and thus, improved energy recovery efficiency of the waste heat utilization device.

Specifically, the second embodiment allows the radiator 12 or the air-cooled heat exchanger 46 to have a heat transfer surface area increased depending on heat loads on their heat exchange sections 12a, 46a, which leads to improved water cooling performance of the radiator 12 and the air-cooled heat exchanger 46.

Further, the second embodiment can ensure that the cooling water having cooled the engine 2 is fed to the heat exchange section 46a of the air-cooled heat exchanger 46 to be cooled therein, after its temperature decreases, thereby preventing a decrease in the efficiency of the AC cycle or RC cycle.

The second embodiment also allows the provision of a shared heat exchange section 58 increased in size or the provision of a plurality of shared heat exchange sections. This is desirable since this allows the radiator 12 and the air-cooled heat exchanger 46 to have a greatly increased heat transfer surface area, leading to further improved water cooling performance of the radiator 12 and the air-cooled heat exchanger 46.

In the above, the first and second embodiments of the present invention have been described. The present invention is however not restricted to the described embodiments but can be altered in various ways without departing from the scope and spirit of the present invention.

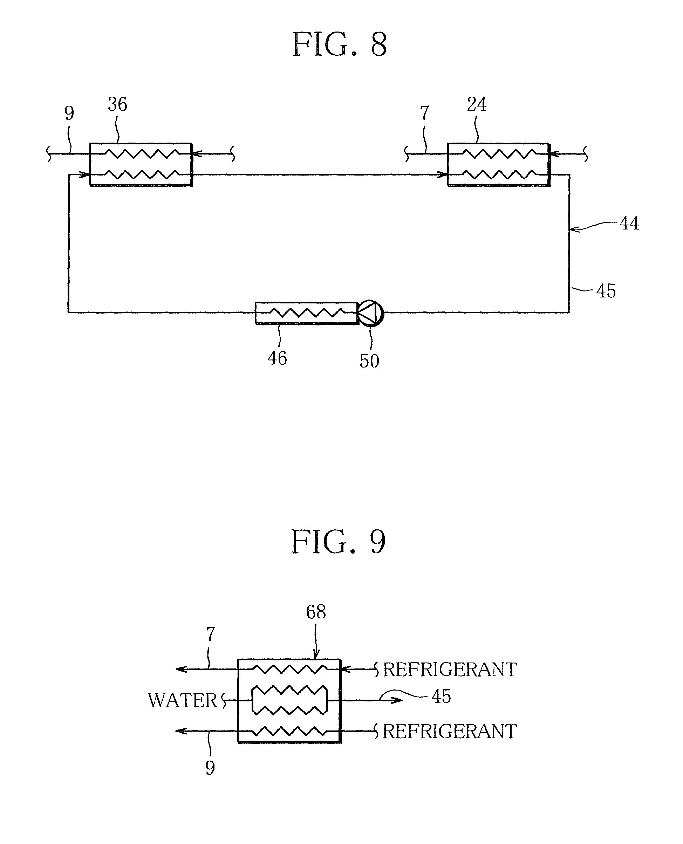

For example, although in the described embodiments the condensers 24, 36 are connected in parallel to the air-cooled heat exchanger 46, the configuration is not restricted to this. As shown in FIG. 8, the configuration may be such that the condensers 24, 36 are connected in series to the air-cooled heat exchanger, where the AC condenser 36 is before the RC condenser 24 in the direction of water flow. In this case, the three-way valve 48 is not required and the water circulating in the water circulation line 44 passes through the AC condenser 36 and then through the RC condenser 24 so that heat transfer takes place stepwise. This has an advantage of being capable of prioritizing comfort of passengers in the vehicle 52 and at the same time reducing the resistance to airflow exerted by the heat exchange unit 53.

Although in the described embodiments, the condensers 24, 36 are separate condensers, the present invention is not restricted to this. As shown in FIG. 9, the condensers 24, 36 may be in the form of an integrated condenser 68, where the water circulation line 54 divides into two lines within the integrated condenser, and the two lines then join together within the integrated condenser. This has an advantage that a greater space available can be left in the vehicle 52.

## Claims

1. A waste heat utilization device for an internal combustion engine, comprising a cooling water circuit including a radiator for cooling cooling-water that has been heated by waste heat produced by the internal combustion engine, by means of outside air drawn to pass through the radiator, a Rankine cycle including an expansion machine for expanding a refrigerant that has been heated by said cooling water, thereby producing drive power and a first condenser for condensing the refrigerant that has passed through the expansion machine, and a refrigeration cycle including a compressor for compressing a refrigerant that has been heated by a heat source and a second condenser for condensing the refrigerant that has passed through the compressor, wherein
the first and second condensers are water-cooled heat exchangers, and
the waste heat utilization device includes a water circuit including a air-cooled heat exchanger for cooling water that has passed through the first and second condensers, by means of outside air drawn to pass through the air-cooled heat exchanger, and
a heat exchange unit composed of said air-cooled heat exchanger and said radiator.

2. The waste heat utilization device for the internal combustion engine according to claim 1, wherein said water circuit is configured such that the first and second condensers are connected in parallel to the air-cooled heat exchanger and includes a flow distribution means for distributing water flow to the first and second condensers in proportions depending on refrigerant condensing abilities required by the Rankine cycle and the refrigeration cycle.

3. The waste heat utilization device for the internal combustion engine according to claim 1, wherein said water circuit is configured such that the first and second condensers are connected in series to the air-cooled heat exchanger, where the second condenser is before the first condenser in the direction of water flow toward the air-cooled heat exchanger.

4. The waste heat utilization device for the internal combustion engine according to any of claims 1 to 3, wherein said first and second condensers are integrated.

5. The waste heat utilization device for the internal combustion engine according to any of claims 1 to 4 wherein said heat exchange unit is constructed such that the radiator is arranged behind the air-cooled heat exchanger in the direction of outside air drawn into them.

6. The waste heat utilization device for the internal combustion engine according to any of claims 1 to 4, wherein said heat exchange unit is constructed such that the radiator and the air-cooled heat are arranged side by side in a direction substantially perpendicular to the direction of outside air drawn into them and integrally connected.

7. The waste heat utilization device for the internal combustion engine according to claim 6, wherein said heat exchange unit includes a blower for controlling the respective amounts of out side air drawn into the air-cooled heat exchanger and the radiator, independently.

8. The waste heat utilization device for the internal combustion engine according to claim 6 or 7, wherein the heat exchange unit includes heat exchange sections constituting the air-cooled heat exchanger and the radiator, respectively, in which heat transfer takes place independently, and a shared heat exchange section used as a supplementary section to either one of the heat exchange sections.

9. The waste heat utilization device for the internal combustion engine according to claim 8, wherein the heat exchange unit includes a flow path change means for changing a water flow path to cause the shared heat exchange section to function as a supplementary section to either one of the heat exchange sections.

10. The waste heat utilization device for the internal combustion engine according to claim 8 or 9, wherein the heat exchange unit includes a plurality of shared heat exchange sections.
